# EUROPEAN PATENT APPLICATION

(11) **EP 2 051 547 A1**
(43) Date of publication of application: **22.04.2009**
(21) Application number: 07020320.3
(22) Date of filing: 17.10.2007
(51) Int. Cl.: H04W 4/00

(54) **Method and device for identifying a home base and communication system comprising such device**

(71) Applicant: Nokia Siemens Networks Oy, 02610 Espoo (FI)
(72) Inventor: Gustrau, Jörg, 81549 München (DE); Heinz, Helmut, 86842 Türkheim (DE)
(74) Representative: Bruglachner, Thomas E.

(57) **Abstract**

A method and a device are provided for identifying a home base station, the method comprising the following steps of (a) a location of a mobile terminal is determined; and (b) based on the location of the mobile terminal it is evaluated whether or not the home base station is within a pre-defined area around the mobile terminal.

## Description

The invention relates to a method and to a device for identifying a home base station and to a communication system comprising such a device.

In particular for 3GPP Release 8, a home NodeB (also referred to herein as "HNB", home base station or femto base station) is subject to evaluation in particular within the context of 3.5G (HSPA/WCDMA) ("3.5G HNB") and LTE ("LTE HNB").

The HNB is considered to be an end-user type of equipment and to a certain extent self-installation/organization functionality is required and/or advantageous for such a device, in contrast to coordinated operator network-planning for macro-deployments.

Several HNBs may be deployed within a macro cell that is administered by a macro cell base station (NodeB). Such a macro cell base station is most commonly subject to offline network-planning by the operator and/or network provider. It is, however, noted that such macro cell may apply to all kinds of cellular systems independent from their actual size. According to such interpretation, also a micro cell may work as macro cell administering further (home) base stations.

HNB deployment scenarios may have to rely on automatic installation and failure recovery procedures.

In a connected mode, a mobile terminal is only required to monitor a limited number of cells, i.e. seek for a limited number of cell IDs. For example, in an UMTS environment, the mobile terminal only monitors up to 32 intra frequency FDD (frequency division duplex) cells (including active set according to 3GPP TS 25.133, Section 8).

This may suffice for typical network deployments. However, with the introduction of said home base stations, the number of neighbor cells significantly increases, e.g., monitoring of only 32 cells may no longer be sufficient. Hence, the home base station cannot be uniquely identified by the mobile terminal (e.g., 32 IDs for up to several hundreds of base stations within a macro cell inevitably results in multiple usage of said IDs).

A practical approach is to determine a subset of cell IDs, e.g., IDs from 200 to 210, that may be used by home base stations within a macro cell. Home base stations that are in a vicinity to one another use different cell IDs.

Due to the limited number of cell IDs, several home base stations within one macro cell may use the same cell ID. With this approach, the number of monitoring cells for the mobile terminal can be kept to, e.g., 32 cells.

As there is no unambiguous relationship based on a home base station ID, this inhibits a hand-over from the macro cell to the home cell, in particular from the macro cell base station to the home base station, because the macro cell base station is not able to unambiguously determine the home base station by its ID.

Thus, a continuity from said macro cell to the home base station is interrupted in particular when the mobile terminal (User Equipment, UE) is in an active mode.

Disadvantageously, as there is no hand-over yet available from the macro cell base station to the home base station (within said macro cell), the mobile terminal remains connected to the macro cell base station even when it is near its home base station. The home base station can only be selected based on a "cell-selection" and/or a "cell-reselection" conducted by the mobile terminal being in an idle mode.

The problem to be solved is to avoid the disadvantages as set forth above and in particular to provide an efficient mechanism for the mobile terminal handed over to a home base station when it is connected to the macro cell base station.

This problem is solved according to the features of the independent claims. Further embodiments result from the depending claims.

In order to overcome this problem, a method for identifying a home base station is provided comprising the following steps:
(a) a location of a mobile terminal is determined;
(b) based on the location of the mobile terminal it is evaluated whether or not the home base station is within a pre-defined area around the mobile terminal.

It is in particular evaluated and/or determined whether or not the home base station and the mobile terminal are within a certain distance or range to one another.

Based on the location of the mobile terminal the distance to the home base station may be determined. Based on such distance, the home base station may be identified.

In an embodiment, a location of the home base station is determined prior to step (b). This may in particular be achieved by the home base station's connection to a fixed network.

Such connection may be used, e.g., by a base station of a macro cell (or a provider and/or network operator) to get or be aware of the home base station's position within the macro cell.

In another embodiment, the location of the home base station is determined by its associated physical address, in particular by its physical post address.

This is another piece of information that may be utilized to get aware of the position of the home base station, in particular within a distinct macro cell.

In a further embodiment, the location of the home base station is determined by a Global Positioning System (GPS).

In a next embodiment, the location of the mobile terminal is determined by a round-trip-time measurement.

It is also an embodiment that the location of the mobile terminal is determined by a Global Positioning System (GPS).

Pursuant to another embodiment, prior to step (a) the mobile terminal identifies the home base station and reports detection of the home base station to a macro cell base station.

This allows the macro cell base station to determine whether the home base station in the vicinity of the mobile terminal is the home base station of this particular mobile terminal (i.e., the home base station to which the mobile terminal is related).

According to an embodiment, the macro cell base station determines the location of the mobile terminal. Preferably, the macro cell base station may hand over a connection to the home base station if the mobile terminal is within a predefined distance to the home base station.

Hence, based on the location of the mobile terminal and the location of the home base station, the macro cell base station is able to uniquely identify the home base station to which, e.g., a call, can be handed over. This applies to handover as well as to soft-handover.

According to yet a further embodiment, the macro cell base station and/or a controlling entity of the macro cell comprises or has access to a mapping table of home cell RTT values towards specific home cells. Based on a value reported, said mapping table can be utilized to find the closest entry, e.g., by comparing and/or rounding.

In particular, the macro cell base station is able to determine the distance between the home base station and the mobile terminal. The location of the home base station may hence be entered in a table (or database) that is accessible to the macro cell base station. Such table can be associated or stored locally with the macro cell base station or centrally, e.g., with an entity of the network. Advantageously, several macro cell base station shall have access to such table or database.

An entry in the table represents the home base station, comprising, e.g., its address, its GPS coordinates and/or its RTT-values. Such an entry may in particular be administered manually or by a separate data transmission towards entity storing the table or database.

Determining the distance between the mobile terminal and the home base station, the macro cell base station upon receiving a message from the user terminal that it has detected a home base station, determines the position of the user terminal, e.g., by RTT measurement and/or by requesting the user terminal's GPS data and compares these data to the table to identify a home base station in the vicinity of the mobile terminal. If the home base station found is the correct one, i.e. associated with this particular user terminal, the macro cell base station may hand over the mobile terminal to this home base station.

Alternatively, the mobile terminal may convey with its message that a home base station has been detected the ID of the home base station and/or the user terminal may indicate that it has found the home base station to which it is associated.

The problem stated above is also solved by a device comprising a processor unit that is equipped and/or arranged such that the method as described herein is executable on said processor unit.

According to an embodiment, the device is a communication device, in particular a network element.

According to a further embodiment, the device is a macro cell base station.

According to yet another embodiment, the device hands over a connection to a home base station identified.

The problem stated supra is further solved by a communication system comprising the device as described herein.

Embodiments of the invention are shown and illustrated in the following figures:
- Fig.1: shows a network topology comprising a macro cell spanned by a macro cell base station, wherein two areas each comprise several home base stations;
- Fig.2: shows a scenario according to Fig.1, wherein the macro cell base station 110 determines locations 201 with a specific round-trip-time (RTT) measurement value;
- Fig.3: shows a scenario bases on Fig.1 comprising the macro cell base station defining said macro cell, the macro cell further comprises a home base station, a mobile terminal or User Equipment UE, wherein the home base station is connected to a fixed network.

According to the approach suggested, a home base station (or home NodeB, "HNB", femto base station) can be uniquely identified not only by its cell ID, but in addition by the location of the mobile terminal (User Equipment, UE).

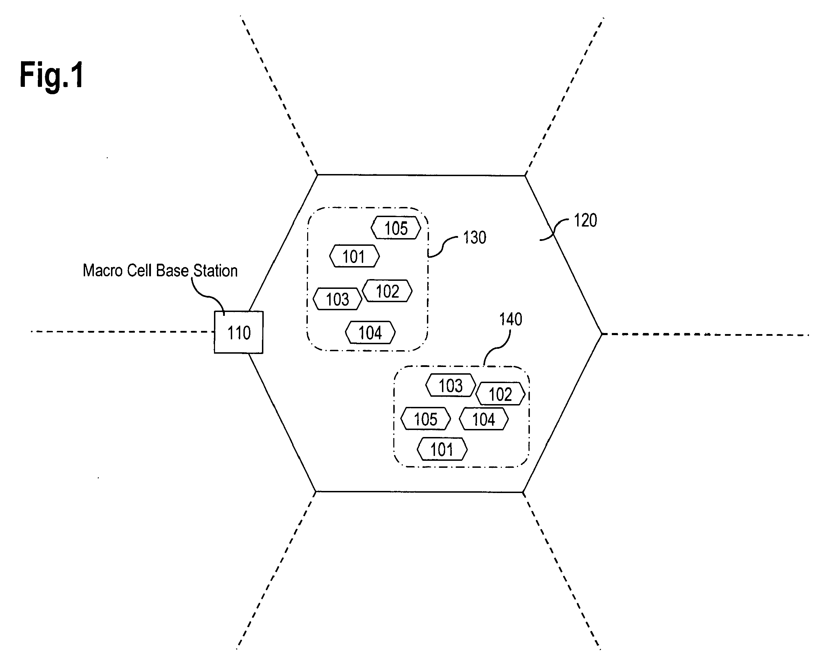

**Fig.1** shows a network topology comprising a macro cell 120 spanned by a macro cell base station 110. The macro cell comprises several home base stations: A first area 130 within the macro cell comprises home base stations 101 to 105 and a second area 140 within the macro cell comprises home base stations 101 to 105. Same referral for a home base stations shows that these two home base stations have identical IDs and hence cannot be distinguished by the network (e.g., by the macro cell base station 110) upon this ID.

The example according to Fig.1 in particular shows that several home base stations can be set up within a macro cell 120, wherein, e.g., said base stations automatically configure themselves during installation to avoid ID conflicts within each area 130 and 140. However, still there may be too many home base stations deployed to be uniquely identified by the macro cell base station 110 only considering each home base station's ID.

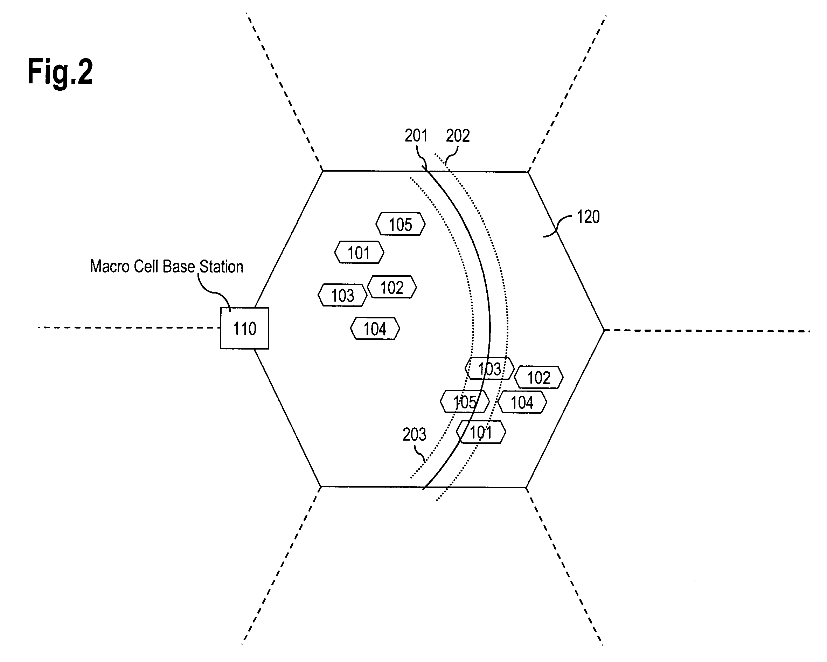

Fig.2 shows a scenario according to Fig.1, wherein the macro cell base station 110 determines locations 201 with a specific round-trip-time (RTT) measurement value. According to a uncertainty of such RTT measurement, the locations associated with the RTT measurement are not strictly on a line 201, but within in region between lines 202 and 203.

The location of the mobile terminal may be determined based on the RTT measurement of/in the network. The connection to the mobile terminal may be handed over from a macro cell base station to the home base station if the mobile terminal is within a per-determined proximity to the position of its associated home base station.

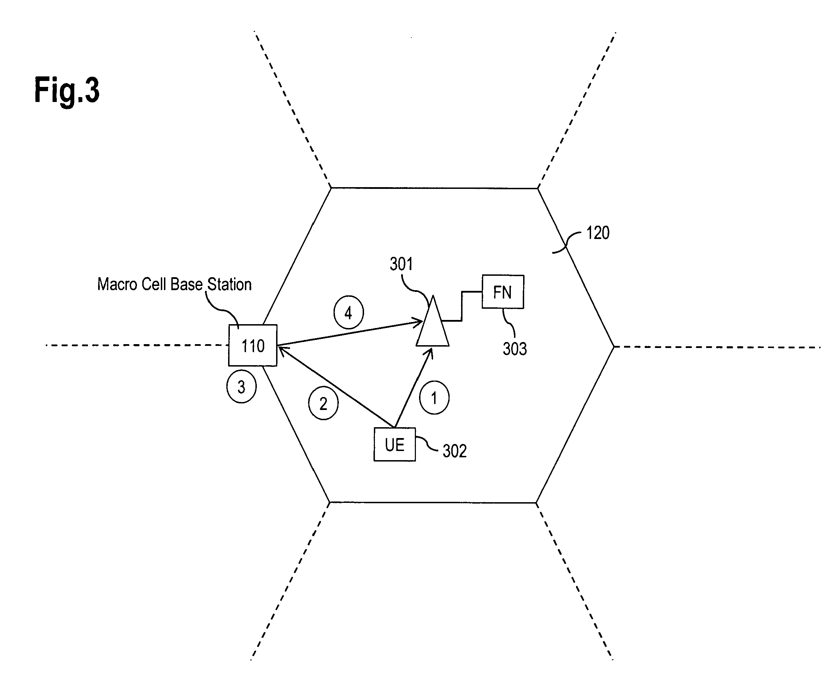

Fig.3 shows a scenario bases on Fig.1 comprising the macro cell base station 110 defining said macro cell 120. The macro cell further comprises a home base station 301, a mobile terminal or User Equipment UE 302 that is associated with this home base station 301. The home base station 301 is connected to a fixed network 303.

The procedure may in particular comprise the following steps:
(1) The mobile terminal 302 identifies its home base station 301, which has the same cell ID as its predefined home base station.
(2) The mobile terminal 302 reports to the macro cell base station 110 (i.e. to the network) that it has detected a home base station with an ID that corresponds to the ID of its home cell. Alternatively, the mobile terminal 302 may report to the macro cell base station that a home base station has been detected and convey the home base station's ID to the macro cell base station.
(3) The network, in particular the macro cell base station 110, initiates and/or performs the RTT measurement based on the corresponding radio link.
(4) The network and/or the macro cell base station 110 hands over the mobile terminal 302 to the home base station 301, if the RTT measurement corresponds to the RTT measurement value associated to the home cell of this mobile terminal; otherwise there will be no handover.

This approach utilizes the fact that the network, i.e. in particular the macro cell base station 110, is aware of the appropriate RTT measurement value of the associated home base station for this mobile terminal 302.

In order to determine the location of the home base station 301 within the macro cell 120, a physical post address can be utilized. Such information may be available if the home base station 301 is connected to the fixed network 303, e.g., a DSL connection.

The operator or provider may determine a distance between the closest macro cell base station and the post address and derive the appropriate RTT measurement value.

A data base in the network can be provided with a mapping table for appropriate RTT measurement values of individual mobile terminals.

It is noted that the macro cell base station only needs to know the appropriate RTT measurement value for the home cells, i.e. for the home base station, in its coverage area and not for all home cells of the network.

The RTT measurement may in particular have an accuracy of 0.5 chips, which corresponds to an accuracy of +/- 40 meters. With the RTT measurement, the network can determine the distance from macro base station within a certain fuzziness. However, the probability for a correct identification of the home base station based on the ID and the RTT measurement is sufficiently high to largely avoid deficient handover commands.

### Further Advantages:

One advantage of this concept is to uniquely identify the home base station not only upon its cell ID, but also upon a location of the mobile terminal detecting the home base station based on RTT measurements. Other location procedures (e.g., GPS) may be used in addition to the RTT measurement or as an alternative.

If the home base station can be uniquely identified within the macro cell, the hand-over from the macro cell to the home cell can be supported by utilizing an existent handover functionality of the mobile terminal.

Hence, home base stations having the same cell ID can coexist within one macro cell. They can be unambiguously identified by the network based on said measured RTT for the terminal, which detects the home cell.

Advantageously, the controlling entity of the macro cell comprises or has access to a mapping table of home cell RTT values towards specific home cells. Based on a value reported, said mapping table can be utilized to find the closest entry, e.g., by comparing and/or rounding.

The approach can be used by the network to initiate handover and/or soft-handover towards the home base station identified by its ID and reported offset.

## Claims

1. A method for identifying a home base station comprising the following steps:
(a) a location of a mobile terminal is determined;
(b) based on the location of the mobile terminal it is evaluated whether or not the home base station is within a pre-defined area around the mobile terminal.

2. The method according to claim 1, wherein a location of the home base station is determined prior to step (b).

3. The method according to claim 2, wherein the location of the home base station is determined by its connection to a fixed network.

4. The method according to any of claims 2 or 3, wherein the location of the home base station is determined by its associated physical address, in particular by its physical post address.

5. The method according to any of claims 2 to 4, wherein the location of the home base station is determined by a Global Positioning System.

6. The method according to any of the preceding claims, wherein the location of the mobile terminal is determined by a round-trip-time measurement.

7. The method according to any of the preceding claims, wherein the location of the mobile terminal is determined by a Global Positioning System.

8. The method according to any of the preceding claims, wherein prior to step (a) the mobile terminal identifies the home base station and reports detection of the home base station to a macro cell base station.

9. The method according to claim 8, wherein the macro cell base station determines the location of the mobile terminal.

10. The method according to claim 9, wherein the macro cell base station hands over a connection to the home base station if the mobile terminal is within a predefined distance to the home base station.

11. The method according to any of claims 8 to 10, wherein the macro cell base station and/or a controlling entity of the macro cell comprises or has access to a mapping table comprising local information of the home base station, in particular comprising RTT values and/or GPS values.

12. A device a processor unit that is arranged such that the method according of any of the preceding claims is executable on said processor unit.

13. The device according to claim 12, wherein said device is a communication device.

14. The device according to one of claims 12 or 13, wherein said device is a macro cell base station.

15. The device according to one of claims 13 or 14, wherein said device hands over a connection to a home base station identified.

16. Communication system comprising the device according to any of claims 12 to 15.
